# EUROPEAN PATENT APPLICATION

(11) **EP 2 164 203 A1**
(43) Date of publication of application: **17.03.2010**
(21) Application number: 08784108.6
(22) Date of filing: 22.08.2008
(51) Int. Cl.: H04L 12/00

(54) **MESSAGE TRANSMISSION METHOD, DEVICE AND SYSTEM FOR IMPLEMENTING MULTICAST SERVICES**

(30) Priority: 25.08.2007 CN 200710147056
(71) Applicant: Huawei Technologies Co., Ltd., Longgang District, Shenzhen Guangdong Province 518129 (CN)
(72) Inventor: ZHENG, Ruobin, Shenzhen Guangdong Province 518129 (CN)
(74) Representative: Pfenning, Meinig & Partner GbR
(86) International application number: PCT/CN2008/072118
(87) International publication number: WO 2009/026846

(57) **Abstract**

A packet transmission method for implementing multicast services is provided. The method includes the following steps. A packet carrying a current network location identifier of multicast data labeled by an access side is received from the access side (S301) Based on preset identifier mapping information, the current network location identifier of the multicast data labeled by the access side in the packet is converted into a current network location identifier of multicast data labeled by a service provider (SP) side that maps the current network location identifier of the multicast data labeled by the access side in the identifier mapping information (S302). The identifier-converted packet is sent to SP side communication equipment corresponding to the current network location identifier of the multicast data labeled by the SP side (S303). A packet transmission device and a packet transmission system for implementing multicast services and another packet transmission method for implementing multicast services are further provided.

## Description

### FIELD OF THE TECHNOLOGY

The present invention relates to the field of multicast technology for network communication, and more particularly to a packet transmission method, a packet transmission device, and a packet transmission system for implementing multicast services.

### BACKGROUND OF THE INVENTION

As broadband users have increasingly high demands for services and the network communication technologies have developed rapidly, the data transmission technology in the broadband network is promoted to develop continuously, such that the data transmission mode has developed from conventional unicast and broadcast to multicast based on an internet protocol (IP) network. The so-called multicast means that a network side circles user-side users requesting the same data in one multicast group. The users in the multicast group are also referred to as multicast group members. A sender of multicast data at the network side, that is, a multicast source, only needs to send multicast data to the multicast group once. Subsequently, through multicast forwarding and duplication, the multicast data is delivered to the multicast group members. Compared with the unicast technology that one link needs to be established to the user for data transmission in each time, the multicast technology decreases the network load. Compared with the broadcast technology that data is sent to users regardless of whether the users request the data or not, the multicast technology reduces the waste of network resources. The implementation of the multicast technology effectively supports batch transmission of data.

In the multicast technology, an IP address may be taken as a current network location identifier for a multicast source or a multicast group. An IP address for identifying a network location of a multicast source is referred to as a multicast source address and an IP address for identifying a network location of a multicast group is referred to as a multicast address. If a user intends to subscribe to a multicast service for transmitting data through the multicast technology, the user first needs to join a multicast group of the corresponding multicast service. Therefore, each multicast address corresponds to a plurality of multicast group members. In the multicast technology, any source multicast (ASM) mode and source specific multicast (SSM) mode may be adopted to transmit multicast data. The ASM mode, that is, any data sender at the network side can be a multicast source of a specific multicast group. The user only needs to obtain a multicast address in advance and joins the multicast group to obtain multicast data sent by one or a plurality of multicast sources, without learning the multicast source addresses in advance. The SSM mode further provides a manner for the user to select multicast data. That is, if the user is interested in multicast data from a specific multicast source, the user is informed of the multicast source address in advance. Subsequently, the user joins the corresponding multicast group and obtains the multicast data sent from the specific multicast source.

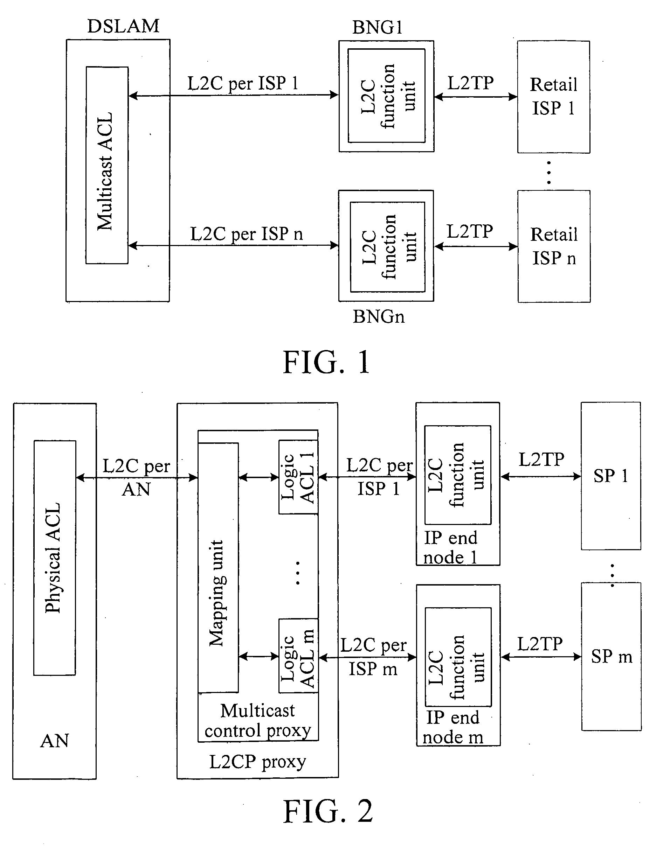

Usually, more than one service provider (SP), for example, Internet SP (ISP), provides multicast services. FIG. 1 shows a scenario that a plurality of ISPs provide multicast services in the prior art. FIG. 1 shows a scenario that a plurality of ISPs provides multicast services in the prior art. In FIG. 1, different ISPs are connected to the same access node (AN), for example, a digital subscriber line access multiplexer (DSLAM), through IP edge nodes one-to-one corresponding to the ISPs, for example, a broadband network gateway (BNG) or a broadband remote access server (BRAS). Each ISP and the corresponding BNG are connected through a layer two control protocol (L2CP). Each BNG and the DSLAM are connected through the layer two control(L2C) one-to-one corresponding to the BNG. Each BNG includes an L2C function unit adapted to accomplish L2C functions to the AN on the BNG. A multicast access control list (ACL) is configured on the DSLAM. In Table 1, basic elements included in the ACL are listed. The ACL may include an access circuit identifier (ACI), a multicast address, a multicast source address, and an ACL property. The user side acquires associated access information through the ACL, so as to perform multicast services. The ACI is unique, and such unique ACI may be referred to as a physical ACI. Correspondingly, the ACL including the physical ACI is a physical ACL.
Usually, the physical ACI is also referred to as an access loop identifier (ALI). The DSLAM transmits packets associated with multicast services between the user side and the network side through the ACL. For example, the user requests to join a certain multicast group through an Internet group management protocol (IGMP) packet. The DSLAM views whether a corresponding physical ACI in the local ACL allows receiving multicast data from the multicast group requested by the user according to a physical ACI corresponding to the IGMP packet from the user; and if yes, the multicast data from the multicast group is duplicated for the user.

**Table 1**

| ACI | Multicast Address | Multicast Source Address | ACL Property |
|---|---|---|---|
| ACI1 | 224.x.y.z | a.b.c.d | >Allowed |
| | 224.x1.y1.z1 | a1.b1.c1.d1 | >Not allowed |
| ACI2 | ... | | |

In order to enable the user side to distinguish multicast services provided by different ISPs, a plurality of IP addresses is usually provided to a different ISP and managed by the ISP. The plurality of IP addresses may be allocated by the ISP to serve as multicast addresses or multicast source addresses. The multicast addresses may form a multicast address space and the multicast source addresses may form a multicast source address space. Usually, in the ASM mode, multicast address spaces of different ISPs are not allowed to have an overlapped region. In the SSM mode, multicast source address spaces of different ISPs are not allowed to have an overlapped region. That is, different ISPs are not allowed to manage the same IP address at the same time.

It is assumed that a user A is a member of a multicast group A corresponding to a multicast service provided by an ISP A and a user B is a member of a multicast group B corresponding to a multicast service provided by an ISP B. If a multicast address A of the multicast group A and a multicast address B of the multicast group B are the same IP address, in the ASM mode, in a downlink direction from the network side to the user side, if the ISP A provides the multicast service A to the user A through the multicast group A, the user B of the multicast group B also receives the multicast service A. However, the user B does not expect to receive the multicast service A, thereby causing a poor user experience for the user B. In addition, it is not proper for the ISP A to charge the user B. In the SSM mode, in an uplink direction from the user side to the network side, if the user A expects to receive a multicast service A' from a multicast source A provided by the ISP A, the user A requests the multicast service A' from the multicast source A. However, if the multicast source A of the ISP A and a multicast source B of the ISP B have the same multicast source address, after receiving the request sent by the user A, the network side does not know how to deal with the request, or a multicast service B' provided by the multicast source B that is not expected by the user A may be connected.

During the implementation of the present invention, the inventor found that the prior art at least has the following problems.

In the technology of implementing the multicast network address management solution of multicast services in the prior art, in one aspect, multicast address spaces or multicast source address spaces managed by different SPs are not allowed to have overlapped regions, which causes inconveniences for the SPs to use or coordinate and plan the multicast address spaces or multicast source address spaces. In another aspect, as discussed above, if an overlapped region appears in the multicast address spaces or multicast source address spaces managed by different SPs, the multicast services are influenced, and it is difficult for the SPs to send multicast data to expected users correctly, or it is difficult for users to request multicast data from expected SPs, causing that the multicast batching transmission services cannot be effectively supported and resulting in poor user experience.

### SUMMARY OF THE INVENTION

Accordingly, the present invention provides a packet transmission method for implementing multicast services, such that a packet associated with a multicast service sent from an access side to a service provider (SP) side is enabled to be correctly transferred to an expected destination.

The packet transmission method for implementing multicast services includes the following steps.

A packet carrying a current network location identifier of multicast data labeled by an access side sent from the access side is received.

Based on preset identifier mapping information, the current network location identifier of the multicast data labeled by the access side in the packet is converted into a current network location identifier of multicast data labeled by an SP side that maps the current network location identifier of the multicast data labeled by the access side in the identifier mapping information.

The identifier-converted packet is sent to SP side communication equipment corresponding to the current network location identifier of the multicast data labeled by the SP side.

The present invention further provides a packet transmission method for implementing multicast services, such that a packet associated with a multicast service sent from an SP side to an access side is enabled to be correctly transferred to an expected destination.

The packet transmission method for implementing multicast services includes the following steps.

A packet carrying a current network location identifier of multicast data labeled by an SP side sent from the SP side is received.

Based on preset identifier mapping information, the current network location identifier of the multicast data labeled by the SP side in the packet is converted into a current network location identifier of multicast data labeled by an access side that maps the current network location identifier of the multicast data labeled by the SP side in the identifier mapping information.

The identifier-converted packet is sent to access side communication equipment corresponding to the current network location identifier of the multicast data labeled by the access side.

The present invention further provides a packet transmission device for implementing multicast services, such that a packet associated with a multicast service transmitted between an SP side and an access side is enabled to be correctly transferred to an expected destination.

The packet transmission device for implementing multicast services includes a packet receiving unit, a mapping unit, and a packet sending unit.

The packet receiving unit is adapted to receive a packet carrying a current network location identifier of multicast data labeled by an access side sent from the access side.

The mapping unit is adapted to convert the current network location identifier of the multicast data labeled by the access side in the packet received by the packet receiving unit into a current network location identifier of multicast data labeled by an SP side that maps the current network location identifier of the multicast data labeled by the access side in preset identifier mapping information based on the identifier mapping information.

The packet sending unit is adapted to send the packet processed by the mapping unit to SP side communication equipment corresponding to the current network location identifier of the multicast data labeled by the SP side.

Alternatively, the packet receiving unit is adapted to receive a packet carrying a current network location identifier of multicast data labeled by an SP side sent from the SP side.

The mapping unit is adapted to convert the current network location identifier of the multicast data labeled by the SP side in the packet received by the packet receiving unit into a current network location identifier of multicast data labeled by an access side that maps the current network location identifier of the multicast data labeled by the SP side in identifier mapping information based on preset identifier mapping relations.

The packet sending unit is adapted to send the packet processed by the mapping unit to access side communication equipment corresponding to the current network location identifier of the multicast data labeled by the access side.

The present invention further provides a packet transmission system for implementing multicast services, which includes a packet transmission device for implementing multicast services, access side communication equipment, and SP side communication equipment. The packet transmission device for implementing multicast services includes a packet receiving unit, a mapping unit, and a packet sending unit.

The packet receiving unit is adapted to receive a packet carrying a current network location identifier of multicast data labeled by an access side sent from the access side.

The mapping unit is adapted to convert the current network location identifier of the multicast data labeled by the access side in the packet received by the packet receiving unit into a current network location identifier of multicast data labeled by an SP side that maps the current network location identifier of the multicast data labeled by the access side in preset identifier mapping information based on the identifier mapping information.

The packet sending unit is adapted to send the packet processed by the mapping unit to the SP side communication equipment corresponding to the current network location identifier of the multicast data labeled by the SP side.

The present invention further provides a packet transmission system for implementing multicast services, which includes a packet transmission device for implementing multicast services, access side communication equipment, and SP side communication equipment. The packet transmission device for implementing multicast services includes a packet receiving unit, a mapping unit, and a packet sending unit.

The packet receiving unit is adapted to receive a packet carrying a current network location identifier of multicast data labeled by an SP side sent from the SP side.

The mapping unit is adapted to convert the current network location identifier of the multicast data labeled by the SP side in the packet received by the packet receiving unit into a current network location identifier of multicast data labeled by an access side that maps the current network location identifier of the multicast data labeled by the SP side in preset identifier mapping information based on the identifier mapping information.

The packet sending unit is adapted to send the packet processed by the mapping unit to the access side communication equipment corresponding to the current network location identifier of the multicast data labeled by the access side.

Compared with the prior art, the implementation of the present invention has the following advantages. In the packet transmission solutions for implementing multicast services provided in the embodiments of the present invention, the current network location identifier of the same multicast data is respectively labeled by an access side and an SP side, and the identifier mapping information between the current network location identifiers of the same multicast data respectively labeled by the access side and the SP side is preset. In one aspect, the access side or the SP side can obtain the destination indicated by the identifier through the current network location identifier of the multicast data labeled by the access side or the SP side itself. In another aspect, a mapping relation between the current network location identifier of the multicast data labeled by the access side and the current network location identifier of the multicast data labeled by the SP side in the identifier mapping information is utilized to correctly transfer a packet associated with multicast services transmitted between the access side and the SP side to an expected destination, thereby enhancing user experiences.

Furthermore, by labeling the current network location identifier of the multicast data by the access side and the SP side respectively and by using the associated identifier mapping information, the current network location identifier of the multicast data labeled by the access side and the current network location identifier of the multicast data labeled by the SP side are isolated. The SP is enabled to manage IP addresses for labeling multicast addresses or multicast source addresses of multicast data independently. Even if different SP sides utilize the same IP address to identify current network locations of different multicast data, as for the access side, the access side labels the current network location identifier of associated multicast data through its own labeling manner, so that the access side can distinguish from the current network location identifier of associated multicast data indicated by the SP side. Therefore, IP address spaces serving as multicast addresses or multicast source addresses managed by different SPs are allowed to have overlapped regions, so as to facilitate the SPs to manage IP addresses serving as current network location identifiers of multicast data.

### BRIEF DESCRIPTION OF THE DRAWINGS

FIG. 1 is a scenario view of multicast services provided by a plurality of ISPs in the prior art;
FIG. 2 is a schematic view of a network location of an L2CP proxy according to an embodiment of the present invention;
FIG. 3 is a flow chart of a packet transmission method for implementing multicast services according to an embodiment of the present invention;
FIG. 4 is a flow chart of a packet transmission method for implementing multicast services according to another embodiment of the present invention;
FIG. 5 is a schematic structural view of a packet transmission device for implementing multicast services according to an embodiment of the present invention;
FIG. 6 is a flow chart of forwarding a packet from an IP edge node by a multicast control proxy according to a first embodiment of the present invention;
FIG. 7 is a flow chart of forwarding a packet from an AN by a multicast control proxy according to a second embodiment of the present invention;
FIG. 8 is a schematic structural view of a packet transmission system for implementing multicast services according to an embodiment of the present invention;
FIG. 9 is another schematic structural view of a packet transmission system for implementing multicast services according to an embodiment of the present invention; and
FIG. 10 is still another schematic structural view of a packet transmission system for implementing multicast services according to an embodiment of the present invention.

### DETAILED DESCRIPTION OF THE EMBODIMENTS

The technical solutions provided in the embodiments of the present invention are further illustrated in detail in the following with reference to the accompanying drawings.

In a situation that Internet protocol (IP) address spaces serving as multicast addresses or multicast source addresses managed by different service providers (SPs) have overlapped regions, current network locations of originally different multicast groups are identified by the same multicast address, or current network locations of originally different multicast sources are identified by the same multicast source address. Therefore, it is difficult for the SPs and users to use the same network location identifier, for example, the multicast address or multicast source address, to identify different multicast groups or multicast sources. Thus, it is difficult to correctly transfer packets such as signaling, message, or multicast data to an expected destination.

In this embodiment of the present invention, in order to enable associated packets transmitted between the SP and the user during multicast services to be correctly transferred to an expected destination, a packet transmission device for implementing multicast services is disposed between an access node (AN) and an IP edge node. In specific implementation, the device is referred to as a multicast control proxy. The multicast control proxy has a capability of correctly transferring associated packets requested to be transmitted by the SP or the user for implementing the multicast services to an expected destination. The multicast control proxy may be placed in a layer two control protocol (L2CP) proxy (L2CP Proxy) in the prior art.

FIG. 2 is a schematic view of a network location of an L2CP proxy according to an embodiment of the present invention. In FIG. 2, one side where the AN is connected to the L2CP proxy is referred to as an access side and one side where the IP edge node is connected to the L2CP proxy is referred to as an SP side. In this embodiment of the present invention, the access side and the SP side respectively identify a current network location of the same multicast data in their respective labeling manner, and identifier mapping information, that is, a mapping relation between a current network location identifier of multicast data labeled by the access side and a current network location identifier of multicast data labeled by the SP side, may be preset. In one aspect, the access side or the SP side can obtain the destination indicated by the identifier through the current network location identifier of multicast data labeled by the access side or the SP side itself. In another aspect, by using the current network location identifier of the multicast data labeled by the access side, the current network location identifier of the multicast data labeled by the SP side, and a mapping relation between the above two identifiers, the multicast control proxy correctly transfers packets associated with multicast services transmitted between the access side and the SP side to expected destinations.

It should be noted that, in this embodiment of the present invention, the access side uses different IP addresses to identify current network locations of different multicast data. An SP at the SP side also uses different IP addresses to identify current network locations of different multicast data. That is, in order to identify current network locations of different multicast data, a certain SP at the access side or the SP side allocates different multicast addresses for different multicast groups, or assigns different multicast source addresses for different multicast sources respectively. Correspondingly, in this embodiment of the present invention, the current network location identifier of the multicast data labeled by the access side may include a current multicast address of the multicast data labeled by the access side, and/or a current multicast source address of the multicast data labeled by the access side. The current network location identifier of the multicast data labeled by the SP side may include a multicast address of a current multicast group of the multicast data labeled by the SP side, and/or a multicast source address of a current multicast source of the multicast data labeled by the SP side. The identifier mapping information may include a mapping relation between the current multicast address of the multicast data labeled by the access side and the current multicast address of the multicast data labeled by the SP side, and/or a mapping relation between the current multicast source address of the multicast data labeled by the access side and the current multicast source address of the multicast data labeled by the SP side.

By labeling the current multicast address or multicast source address of the multicast data by the access side and the SP side respectively and by using the mapping relation, the current multicast address or multicast source address of the multicast data labeled by the access side and the current multicast address or multicast source address of the multicast data labeled by the SP side are isolated. The SP is enabled to manage IP addresses for labeling the multicast address or multicast source address of multicast data independently. Moreover, the access side uses an IP address unique for the access side to identify a current network location of multicast data, and correspondingly, a certain SP at the SP side also uses an IP address unique for the SP to identify the current network location of the multicast data. Furthermore, as the access side maps the SP, in this embodiment of the present invention, according to the mapping relation, the multicast control proxy can obtain the current network location identifier of the multicast data labeled by the SP side corresponding to the current network location identifier of the multicast data labeled by the access side, and can also obtain the current network location identifier of the multicast data labeled by the access side corresponding to the current network location identifier of the multicast data labeled by the SP side.

For a situation of a plurality of SPs, in this embodiment of the present invention, one-to-one corresponding identifier mapping information is set between the access side and each SP. Therefore, even if different SPs at the SP side use the same IP address to identify current network locations of different multicast data, the multicast control proxy can still obtain the current network location identifier of the multicast data labeled by SP side corresponding to the current network location identifier of the multicast data labeled by the access side, and obtain the current network location identifier of the multicast data labeled by the access side corresponding to the current network location identifier of the multicast data labeled by the SP side according to different identifier mapping information between the access side and different SPs.

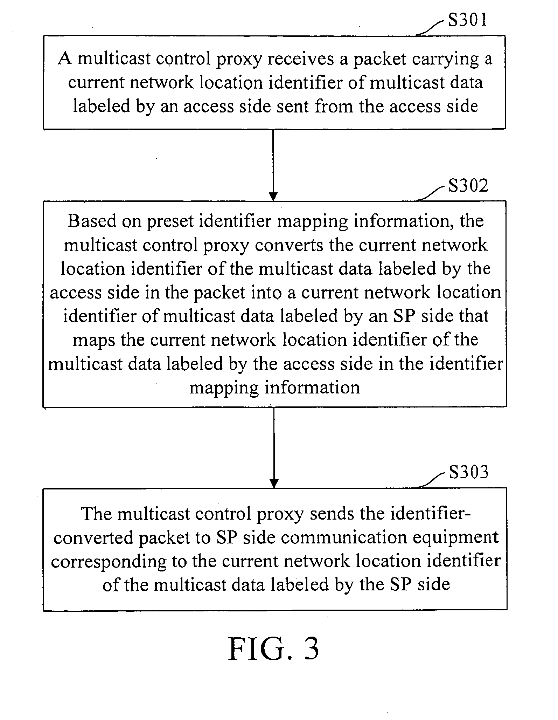

FIG. 3 is a flow chart of a packet transmission method for implementing multicast services according to an embodiment of the present invention, which includes the following steps.

In Step S301, a multicast control proxy receives a packet carrying a current network location identifier of multicast data labeled by an access side sent from the access side.

In Step S302, based on preset identifier mapping information, the multicast control proxy converts the current network location identifier of the multicast data labeled by the access side in the packet into a current network location identifier of multicast data labeled by an SP side that maps the current network location identifier of the multicast data labeled by the access side in the identifier mapping information.

In Step S303, the multicast control proxy sends the identifier-converted packet to SP side communication equipment corresponding to the current network location identifier of the multicast data labeled by the SP side.

The SP side communication equipment may be an IP edge node, for example, a BNG or BRAS.

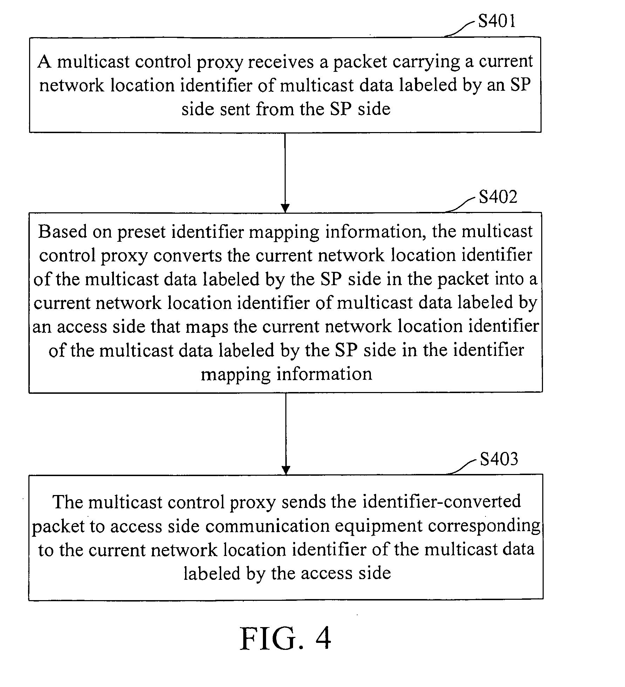

Correspondingly, FIG. 4 is a flow chart of a packet transmission method for implementing multicast services according to another embodiment of the present invention, which includes the following steps.

In Step S401, a multicast control proxy receives a packet carrying a current network location identifier of multicast data labeled by an SP side sent from the SP side.

In Step S402, based on preset identifier mapping information, the multicast control proxy converts the current network location identifier of the multicast data labeled by the SP side in the packet into a current network location identifier of multicast data labeled by an access side that maps the current network location identifier of the multicast data labeled by the SP side in the identifier mapping information.

In Step S403, the multicast control proxy sends the identifier-converted packet to access side communication equipment corresponding to the current network location identifier of the multicast data labeled by the access side.

The access side communication equipment may be an AN, for example, a DSLAM.

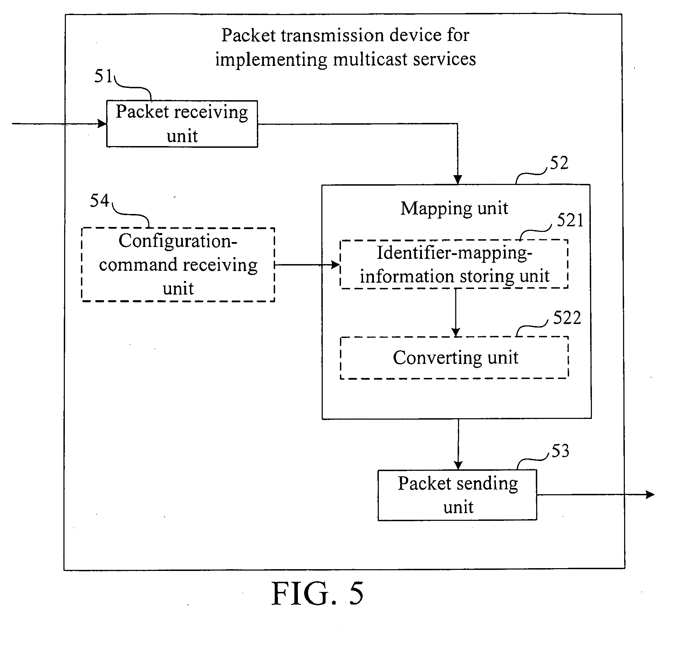

FIG. 5 is a schematic structural view of a packet transmission device for implementing multicast services according to an embodiment of the present invention. The device is the multicast control proxy, which includes a packet receiving unit 51, a mapping unit 52, and a packet sending unit 53.

The packet receiving unit 51 is adapted to receive a packet carrying a current network location identifier of multicast data labeled by an access side sent from the access side.

The mapping unit 52 is adapted to convert the current network location identifier of the multicast data labeled by the access side in the packet received by the packet receiving unit 51 into a current network location identifier of multicast data labeled by an SP side that maps the current network location identifier of the multicast data labeled by the access side in preset identifier mapping information based on the identifier mapping information.

The packet sending unit 53 is adapted to send the packet processed by the mapping unit 52 to SP side communication equipment corresponding to the current network location identifier of the multicast data labeled by the SP side.

Alternatively, the packet receiving unit 51 is adapted to receive a packet carrying a current network location identifier of multicast data labeled by an SP side sent from the SP side.

The mapping unit 52 is adapted to convert the current network location identifier of the multicast data labeled by the SP side in the packet received by the packet receiving unit 51 into a current network location identifier of multicast data labeled by an access side that maps the current network location identifier of the multicast data labeled by the SP side in preset identifier mapping information based on the identifier mapping information.

The packet sending unit 53 is adapted to send the packet processed by the mapping unit 52 to access side communication equipment corresponding to the current network location identifier of the multicast data labeled by the access side.

The mapping unit 52 may include an identifier-mapping-information storing unit 521 and a converting unit 522.

The identifier-mapping-information storing unit 521 is adapted to store a preset mapping relation between the current network location identifier of the multicast data labeled by the SP side and the current network location identifier of the multicast data labeled by the access side.

The converting unit 522 is adapted to convert the current network location identifier of the multicast data labeled by the access side in the packet received by the packet receiving unit 51 into the current network location identifier of the multicast data labeled by the SP side, or convert the current network location identifier of the multicast data labeled by the SP side in the packet received by the packet receiving unit 51 into the current network location identifier of the multicast data labeled by the access side through the mapping information obtained from the identifier-mapping-information storing unit 521.

The device may further include: a configuration-command receiving unit 54, adapted to receive a configuration command sent from the SP side communication equipment for configuring identifier mapping information stored in the identifier-mapping-information storing unit 521.

The SP side communication equipment may be the IP edge node, for example, a BNG or BRAS. The access side communication equipment may be access equipment, for example, a DSLAM serving as an AN.

As the ACL is adapted to perform access control on access ports to be visited, in this embodiment of the present invention, the ACL is adapted to control a multicast address or multicast source address to be bound with a current access line port of an ACI. Therefore, in this embodiment of the present invention, during specific implementation, a physical ACL may be stored on the AN. The basic elements included by the physical ACL are shown in Table 2.

**Table 2**

| ACI | Multicast Address Labeled by Access Side | Multicast Source Address Labeled by Access Side | ACL Property |
|---|---|---|---|
| ACI1 | 224.x.y.z | a.b.c.d | >Allowed |
| | 224.x1.y1.z1 | a1.b1.c1.d1 | >Not allowed |
| ACI2 | ... | | |

Correspondingly, in the multicast control proxy, an ACL may also be set. In order to be distinguished from the physical ACL set on the AN, the ACL is referred to as a logical ACL. The logical ACL has the following function. The identifier mapping information in this embodiment of the present invention is configured in the logical ACL. The multicast control proxy finds out corresponding identifier mapping information by looking up the logical ACL. Correspondingly, after receiving a request for joining, for example, a current multicast address of multicast data labeled by an access side sent from the user, the multicast control proxy determines whether the multicast address allows the current access line port of the ACI to be occupied according to the logical ACL; and if yes, the corresponding binding of a current multicast address of multicast data labeled by an SP side and the access line port may be further obtained in the logical ACL according to the mapping relation. Table 3 is a list of basic elements included by the logical ACL.

**Table 3**

| ACI | Multicast Address Labeled by SP Side | Multicast Source Address Labeled by SP Side | ACL Property |
|---|---|---|---|
| ACII | 192.a.b.c | m.n.p.q | >Allowed |
| | 192.e.f.g | m1.n1.p1.q1 | >Not Allowed |
| ACI2 | ... | | |

The identifier mapping information configured in the logical ACL may be referred to Table 4.

**Table 4**

| Multicast Address Labeled by SP Side | Multicast Address Labeled by Access Side | Multicast Source Address Labeled by SP Side | Multicast Source Address Labeled by Access Side |
|---|---|---|---|
| 192.a.b.c | 224.x.y.z | m.n.p.q | a.b.c.d |
| 192.e.f.g | 224.x1.y1.z1 | m1.n1.p1.q1 | a1.b1.c1.d1 |
| ... | ... | ... | ... |

In this embodiment of the present invention, the packet transmitted between the SP side and the access side may include a control packet or a data packet. The control packet may include an L2C message. The data packet may include an electronic program guide (EPG) packet or a multicast data packet. One logical ACL corresponds to one SP. The SP side may send a configuration command for configuring the logical ACL to the multicast control proxy through an L2C message. The logical ACL in the multicast control proxy is visited and managed. The command sent from the SP side may be received by the configuration-command receiving unit of the multicast control proxy. In addition, each logical ACL corresponds to a physical ACL in the AN. The logical ACLs and the physical ACLs may be in a one-to-one or many-to-one corresponding relation. If the many-to-one corresponding relation is adopted, physical port resources of the AN may be saved and the resource utilization rate of the ports is increased. If the logical ACLs and the physical ACLs are in a many-to-one corresponding relation, a plurality of logical ACLs may share the same physical ACL through time-division-multiplexing, or may share the same physical ACL through other policies. In this embodiment of the present invention, the identifier mapping information saved in the multicast control proxy may be preset.

The technical solutions in the embodiments of the present invention are further illustrated in the following with reference to specific embodiments.

### First Embodiment

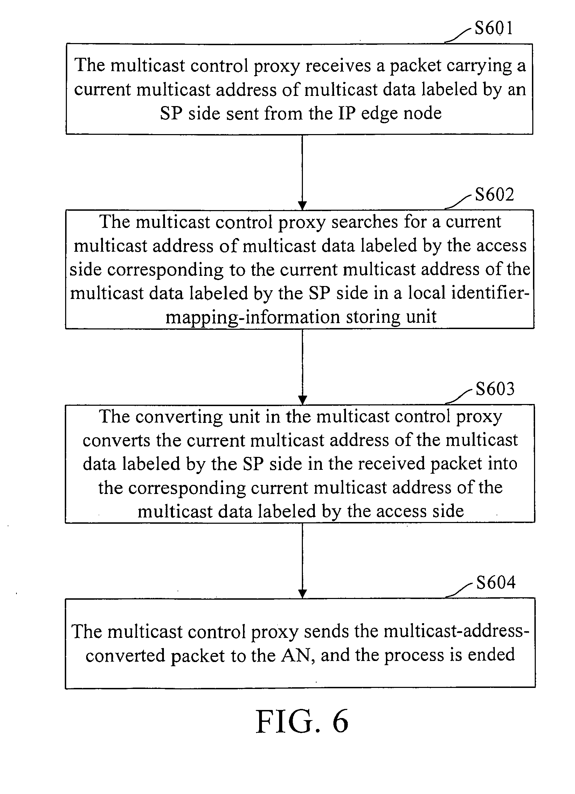

FIG. 6 is a flow chart of forwarding a packet from an IP edge node by a multicast control proxy according to a first embodiment of the present invention, which includes the following steps.

In Step S601, the multicast control proxy receives a packet carrying a current multicast address of multicast data labeled by an SP side sent from the IP edge node.

In the first embodiment, the multicast control proxy processes the packet in a downlink direction from the SP side to an access side. The packet may be a downlink L2C message from the SP or an EPG packet or multicast data packet from an IP television (IPTV) server or a middle ware. The L2CP proxy may configure the logical ACL as shown in Table 3 corresponding to the SP according to the downlink L2C message from the SP.

In Step S602, the multicast control proxy searches for a current multicast address of multicast data labeled by the access side corresponding to the current multicast address of the multicast data labeled by the SP side in a local identifier-mapping-information storing unit.

In the first embodiment, in specific implementation, a mapping relation between the current multicast address of the multicast data labeled by the access side and the current multicast address of the multicast data labeled by the SP side may be configured in the logical ACL corresponding to the SP. The multicast control proxy may obtain the required mapping relation from the logical ACL and further find out the required current multicast address of the multicast data labeled by the access side.

In Step S603, the converting unit in the multicast control proxy converts the current multicast address of the multicast data labeled by the SP side in the received packet into the corresponding current multicast address of the multicast data labeled by the access side.

In Step S604, the multicast control proxy sends the multicast-address-converted packet to the AN, and the process is ended.

### Second Embodiment

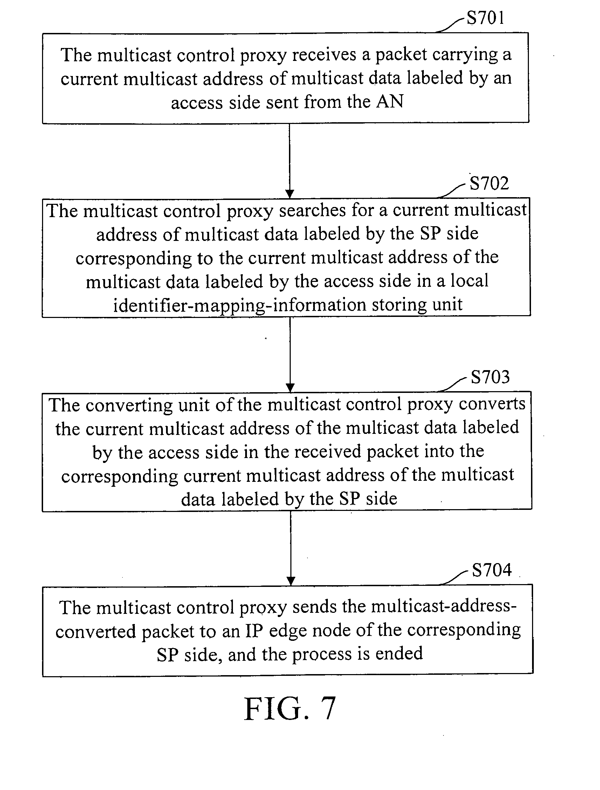

FIG. 7 is a flow chart of forwarding a packet from an AN by a multicast control proxy according to a second embodiment of the present invention, which includes the following steps.

In Step S701, the multicast control proxy receives a packet carrying a current multicast address of multicast data labeled by an access side sent from the AN.

In the second embodiment, the multicast control proxy processes the packet in an uplink direction from an access side to an SP side. Corresponding to the downlink L2C message capable of being processed in the first embodiment, the packet in the second embodiment may be an uplink L2C message from the access side to the SP side.

In Step S702, the multicast control proxy searches for a current multicast address of multicast data labeled by the SP side corresponding to the current multicast address of the multicast data labeled by the access side in a local identifier-mapping-information storing unit.

In the second embodiment, in specific implementation, a mapping relation between the current multicast address of the multicast data labeled by the access side and the current multicast address of the multicast data labeled by the SP side may be configured in the logical ACL corresponding to the SP. The multicast control proxy may obtain the required mapping relation from the logical ACL and further find out the required current multicast address of the multicast data labeled by the SP side.

In Step S703, the converting unit of the multicast control proxy converts the current multicast address of the multicast data labeled by the access side in the received packet into the corresponding current multicast address of the multicast data labeled by the SP side.

In Step S704, the multicast control proxy sends the multicast-address-converted packet to an IP edge node of the corresponding SP side, and the process is ended.

In the first and second embodiments, the current network location identifier of the multicast data labeled by the access side or the SP side carried in the packet may also be a current multicast source address identifier of the multicast data. Alternatively, both the current multicast address identifier of the multicast data and the current multicast source address identifier of the multicast data are carried.

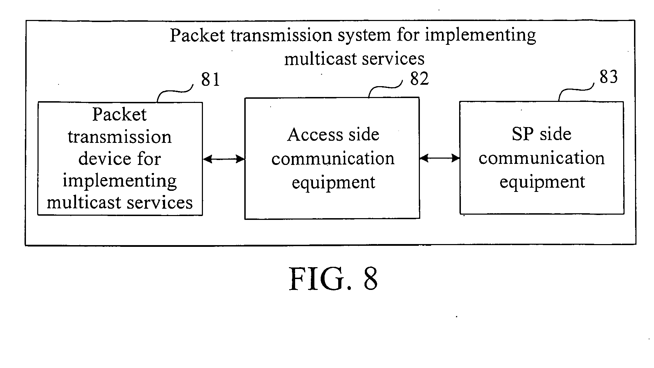

In an embodiment, the present invention further provides a packet transmission system for implementing multicast services. FIG. 8 is a schematic structural view of the system. Referring to FIG. 8, the system includes a packet transmission device for implementing multicast services 81, access side communication equipment 82, and SP side communication equipment 83. The packet transmission device for implementing multicast services 81 is the L2CP proxy. The access side communication equipment 82 may be an AN, for example, a DSLAM. The SP side communication equipment 83 is, for example, a BNG or BRAS.

FIG. 2 may be an example of the packet transmission system, in which the L2CP proxy including the multicast control proxy is set separately. In practical applications, the L2CP proxy may be set together with other communication equipment.

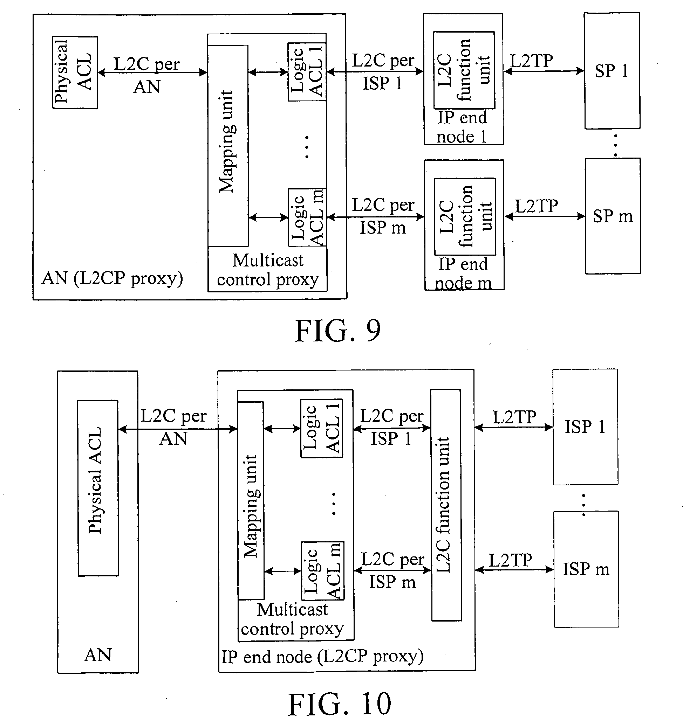

FIG. 9 is another schematic structural view of the packet transmission system, in which the L2CP proxy including the multicast control proxy is set together with an AN. FIG. 10 is another schematic structural view of the packet transmission system, in which the L2CP proxy including the multicast control proxy is set together with an IP edge node.

To sum up, in the packet transmission method, packet transmission device, and packet transmission system for implementing multicast services provided in the embodiments of the present invention, the current network location identifier of the same multicast data is respectively labeled by the access side and the SP side, and a mapping relation between the current network location identifier of the multicast data labeled by the access side and the current network location identifier of the multicast data labeled by the SP side is preset. In one aspect, the access side or the SP side can obtain the destination indicated by the identifier through the current network location identifier of the multicast data labeled by the access side or the SP side itself. In another aspect, the mapping relation between the current network location identifier of the multicast data labeled by the access side and the current network location identifier of the multicast data labeled by the SP side is utilized to correctly transfer a packet associated with multicast services transmitted between the access side and the SP side to an expected destination, thereby enhancing user experiences.

Furthermore, by labeling the current network location identifier of the multicast data by the access side and the SP side respectively and by using the above mapping information, the current network location identifier of the multicast data labeled by the access side and the current network location identifier of the multicast data labeled by the SP side are isolated. The SP is enabled to manage IP addresses for labeling multicast addresses or multicast source addresses of multicast data independently. Even if different SP sides utilize the same IP address to identify current network locations of different multicast data, as for the access side, the access side labels the current network location identifier of associated multicast data through its own labeling manner, so that the access side can distinguish from the current network location identifier of associated multicast data indicated by the SP side. Therefore, IP address spaces serving as multicast addresses or multicast source addresses managed by different SPs are allowed to have overlapped regions.

Through the above description of the implementation, it is apparent to persons skilled in the art that the present invention may be accomplished through hardware, or through software together with a necessary universal hardware platform. Thus, the technical solutions of the present invention may be embodied in the form of a software product. The software product may be stored in a nonvolatile storage media (for example, CD-ROM, USB flash drive, or removable hard disk) and contain several instructions for instructing computer equipment (for example, a personal computer, server, or network equipment) to perform the method according to the embodiments of the present invention.

In general, the above descriptions are merely preferred embodiments of the present invention, but not intended to limit the scope of the present invention. Any modification, equivalent replacement, or improvement made without departing from the spirit and principle of the present invention should fall within the scope of the present invention.

## Claims

1. A packet transmission method for implementing multicast services, comprising:
receiving a packet carrying a current network location identifier of multicast data labeled by an access side sent from the access side;
converting the current network location identifier of the multicast data labeled by the access side in the packet into a current network location identifier of multicast data labeled by a service provider, SP, side that maps the current network location identifier of the multicast data labeled by the access side in preset identifier mapping information based on the identifier mapping information; and
sending the identifier-converted packet to SP side communication equipment corresponding to the current network location identifier of the multicast data labeled by the SP side.

2. The method according to claim 1, wherein the current network location identifier of the multicast data labeled by the access side is a current multicast address of the multicast data labeled by the access side, and/or a current multicast source address of the multicast data labeled by the access side;
the current network location identifier of the multicast data labeled by the SP side is a current multicast address of the multicast data labeled by the SP side, and/or a current multicast source address of the multicast data labeled by the SP side;
the identifier mapping information comprises a mapping relation between the current multicast address of the multicast data labeled by the access side and the current multicast address of the multicast data labeled by the SP side, and/or a mapping relation between the current multicast source address of the multicast data labeled by the access side and the current multicast source address of the multicast data labeled by the SP side; and
the converting the current network location identifier of the multicast data labeled by the access side into the current network location identifier of the multicast data labeled by the SP side further comprises:
converting the current multicast address of the multicast data labeled by the access side into the current multicast address of the multicast data labeled by the SP side or converting the current multicast source address of the multicast data labeled by the access side into the current multicast source address of the multicast data labeled by the SP side.

3. The method according to claim 1 or 2, wherein the packet comprises a control packet or a data packet,
the control packet comprises a layer two control, L2C, message, and
the data packet comprises an electronic program guide, EPG, packet or a multicast data packet.

4. The method according to claim 1, wherein the identifier mapping information is stored in an access control list, ACL, controlled and configured by a configuration command sent from the SP side, and the ACL further comprises access circuit identifier, ACI, information in a binding relation with the current network location identifier of the multicast data labeled by the SP side.

5. A packet transmission method for implementing multicast services, comprising:
receiving a packet carrying a current network location identifier of multicast data labeled by a service provider, SP, side sent from the SP side;
converting the current network location identifier of the multicast data labeled by the SP side in the packet into a current network location identifier of multicast data labeled by an access side that maps the current network location identifier of the multicast data labeled by the SP side in preset identifier mapping information based on the identifier mapping information; and
sending the identifier-converted packet to access side communication equipment corresponding to the current network location identifier of the multicast data labeled by the access side.

6. The method according to claim 5, wherein the current network location identifier of the multicast data labeled by the access side is a current multicast address of the multicast data labeled by the access side, and/or a current multicast source address of the multicast data labeled by the access side;
the current network location identifier of the multicast data labeled by the SP side is a current multicast address of the multicast data labeled by the SP side, and/or a current multicast source address of the multicast data labeled by the SP side;
the identifier mapping information comprises a mapping relation between the current multicast address of the multicast data labeled by the access side and the current multicast address of the multicast data labeled by the SP side, and/or a mapping relation between the current multicast source address of the multicast data labeled by the access side and the current multicast source address of the multicast data labeled by the SP side; and
the converting the current network location identifier of the multicast data labeled by the SP side into the current network location identifier of the multicast data labeled by the access side further comprises:
converting the current multicast address of the multicast data labeled by the SP side into the current multicast address of the multicast data labeled by the access side, or
converting the current multicast source address of the multicast data labeled by the SP side into the current multicast source address of the multicast data labeled by the access side.

7. The method according to claim 5 or 6, wherein
the packet comprises a control packet or a data packet,
the control packet comprises a layer two control, L2C, message, and
the data packet comprises an electronic program guide, EPG, packet or a multicast data packet.

8. The method according to claim 5, wherein the identifier mapping information is stored in an access control list, ACL, controlled and configured by a configuration command sent from the SP side, and the ACL further comprises access circuit identifier, ACI, information in a binding relation with the current network location identifier of the multicast data labeled by the SP side.

9. A packet transmission device for implementing multicast services, comprising:
a packet receiving unit, adapted to receive a packet carrying a current network location identifier of multicast data labeled by an access side sent from the access side;
a mapping unit, adapted to convert the current network location identifier of the multicast data labeled by the access side in the packet received by the packet receiving unit into a current network location identifier of multicast data labeled by a service provider, SP, side that maps the current network location identifier of the multicast data labeled by the access side in preset identifier mapping information based on the identifier mapping information; and
a packet sending unit, adapted to send the packet processed by the mapping unit to SP side communication equipment corresponding to the current network location identifier of the multicast data labeled by the SP side; or
a packet receiving unit, adapted to receive a packet carrying a current network location identifier of multicast data labeled by an SP side sent from the SP side;
a mapping unit, adapted to convert the current network location identifier of the multicast data labeled by the SP side in the packet received by the packet receiving unit into a current network location identifier of multicast data labeled by an access side that maps the current network location identifier of the multicast data labeled by the SP side in preset identifier mapping information based on the identifier mapping relation; and
a packet sending unit, adapted to send the packet processed by the mapping unit to access side communication equipment corresponding to the current network location identifier of the multicast data labeled by the access side.

10. The device according to claim 9, wherein the mapping unit further comprises:
an identifier-mapping-information storing unit, adapted to store a mapping relation between the current network location identifier of the multicast data labeled by the SP side and the current network location identifier of the multicast data labeled by the access side in the preset identifier mapping information; and
a converting unit, adapted to convert the current network location identifier of the multicast data labeled by the access side in the packet received by the packet receiving unit into the current network location identifier of the multicast data labeled by the SP side or convert the current network location identifier of the multicast data labeled by the SP side in the packet received by the packet receiving unit into the current network location identifier of the multicast data labeled by the access side through identifier mapping information obtained from the identifier-mapping-information storing unit.

11. The device according to claim 9, further comprising: a configuration-command receiving unit, adapted to receive a configuration command sent from the SP side communication equipment for configuring identifier mapping information stored in the identifier-mapping-information storing unit.

12. The device according to claim 9, wherein the device is disposed on a layer two control protocol, L2CP, proxy.

13. A packet transmission system for implementing multicast services, comprising: a packet transmission device for implementing multicast services, access side communication equipment, and service provider, SP, side communication equipment, wherein the packet transmission device for implementing multicast services comprises:
a packet receiving unit, adapted to receive a packet carrying a current network location identifier of multicast data labeled by an access side sent from the access side;
a mapping unit, adapted to convert the current network location identifier of the multicast data labeled by the access side in the packet received by the packet receiving unit into a current network location identifier of multicast data labeled by an SP side that maps the current network location identifier of the multicast data labeled by the access side in preset identifier mapping information based on the identifier mapping information; and
a packet sending unit, adapted to send the packet processed by the mapping unit to the SP side communication equipment corresponding to the current network location identifier of the multicast data labeled by the SP side.

14. A packet transmission system for implementing multicast services, comprising: a packet transmission device for implementing multicast services, access side communication equipment, and service provider, SP, side communication equipment, wherein the packet transmission device for implementing multicast services comprises:
a packet receiving unit, adapted to receive a packet carrying a current network location identifier of multicast data labeled by an SP side sent from the SP side;
a mapping unit, adapted to convert the current network location identifier of the multicast data labeled by the SP side in the packet received by the packet receiving unit into a current network location identifier of multicast data labeled by an access side that maps the current network location identifier of the multicast data labeled by the SP side in preset identifier mapping information based on the identifier mapping information; and
a packet sending unit, adapted to send the packet processed by the mapping unit to the access side communication equipment corresponding to the current network location identifier of the multicast data labeled by the access side.
